# EUROPEAN PATENT SPECIFICATION

(11) **EP 0 388 644 B1**
(45) Date of publication and mention of the grant of the patent: **25.05.1994**
(21) Application number: 90103251.6
(22) Date of filing: 20.02.1990
(51) Int. Cl.: B21D 28/12, B23Q 3/155, B21D 37/14

(54) **Sheet metal punching machine**
Stanzmaschine zum Bearbeiten von Metallblechen
Machine à poinçonner la tôle

(30) Priority: 21.02.1989 IT 335089
(43) Date of publication of application: 26.09.1990
(73) Proprietor: RAINER S.r.l., I-40012 Calderara di Reno (Bologna) (IT)
(72) Inventor: Perazzolo, Eugenio, 45100 Rovigo (IT)
(74) Representative: Boggio, Luigi

(56) References cited:
- EP-A- 0 129 866
- EP-A- 0 143 257
- EP-A- 0 178 640
- EP-A- 0 215 644
- DE-A- 3 112 393
- DE-A- 3 507 220
- DE-U- 8 702 211
- FR-A- 2 437 931
- GB-A- 300 689
- GB-A- 2 044 657
- GB-A- 2 052 342
- GB-A- 2 071 554
- US-A- 4 869 141

## Description

The present invention relates to a sheet metal punching machine.
At present, punching machines are requested to carry out punching operations of different dimensions and shapes using one punching machine only. Such punching operations can be carried out through a single-punch machine, or a turret punching machine, or a chain punching machine, and flexibility and productivity of a punching machine increase from a single-punch machine to a chain punching machine.

A first kind of chain punching machine is disclosed in German Patent Application DE-U-87 02 211. In particular, chain punching machine comprises a first and a second chain conveyer, designed to advance, respectively, a plurality of punches and a plurality of dies towards a working station. Furthermore, chain punching machine comprises blocking means for blocking selectively a punch and a die in the working station under a hammer. Conveyers further comprise a tool change devices, designed to transfer a punch and a die between conveyers themselves and working station.

In use, chain conveyers are operated for moving selectively a punch and a die, respectively, to the tool change devices, which, successively, transfer the punch and the die from the conveyers to the working station under the hammer.

Likewise, a second kind of chain punching machine is disclosed in German Patent Application DE-A-3 507 220. In particular, chain punching machine comprises a first and a second chain conveyer, designed to advance punches and dies along a closed path, and tool change devices, designed to transfer selectively a punch and a die from conveyers to a rotatable turret.

In use, chain conveyers are operated for moving selectively a punch and a die, respectively, to the tool change devices, which, successively, transfer the punch and the die from the conveyers to the turret. Later on, turret is rotated for move the punch and the die in a working station under a hammer.

Both the first and the second kind of chain punching machine have the disadvantage that each punch and each die must be transferred from the chain conveyer under a hammer through tool change devices. As a result, a considerable amount of time is spent every time a tool is to be changed. It is worth noticing that time for changing tools becomes particularly relevant when punching operations are different for dimensions and shapes, and, as a result, tools must be changed many times.

The object of the present invention is to produce a sheet metal punching machine which does not suffer from these drawbacks.

In accordance with the present invention, there is provided a sheet metal punching machine comprising:
a plurality of punch sets;
a plurality of die sets;
a first line of the type comprising a plurality of first seat means for said punch sets;
a second line of the type comprising a plurality of second seat means for said die sets;
at least a working station comprising a drop hammer mobile along a vertical punching axis, first centering means for one of said first seat means, said one first seat means constantly supporting, in use, a respective punch set during advancement and punching, and second centering means for one of said die set, said one die set being constantly accommodated, in use, within a respective said second seat means during advancement and punching;
an electrical control computer designed to manage the functioning of the entire installation wherein
said first and second line comprises, each, a powered conveyer chain, said first conveyer chain carrying said first seat means, lodging, each, a said punch set, and said second conveyer chain carrying said second seat means, lodging, each, a said die set.

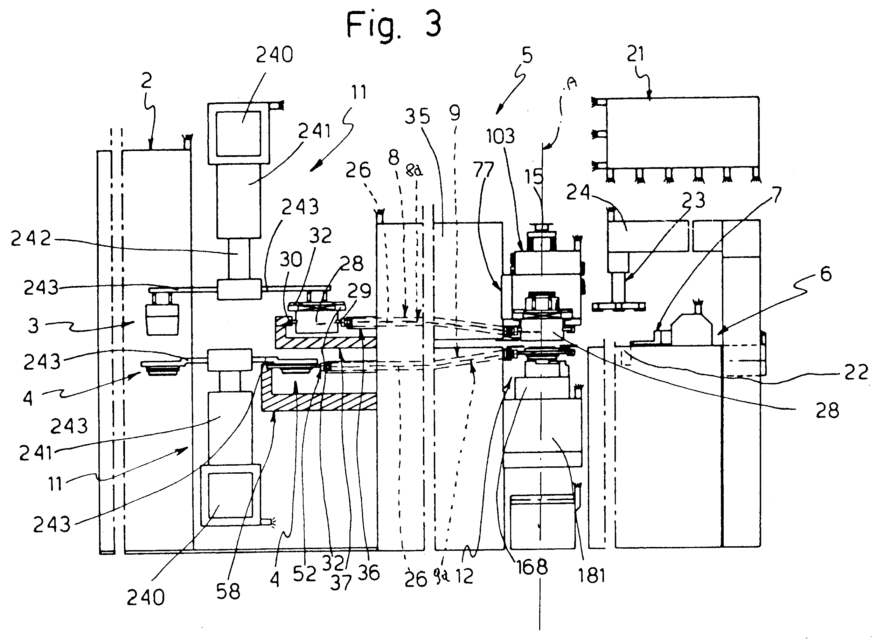

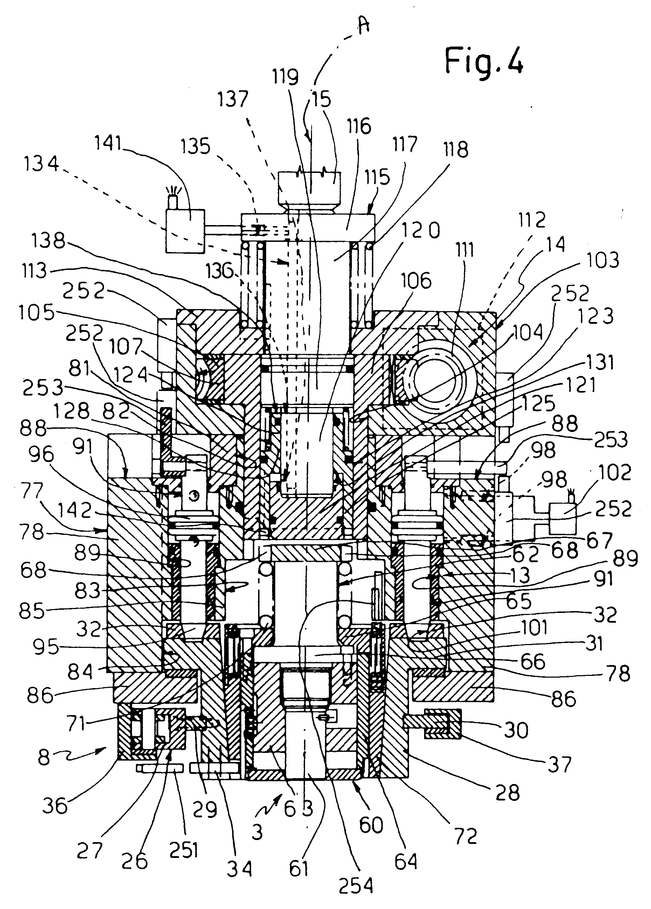

In order to make the present invention easier to understand, we shall now describe a preferred implementation formula, purely as a non-limitative example, referring to the enclosed drawings in which:
- figure 1 is a plan view of a sheet metal punching machine;
- figure 2 is a plan view on a bigger scale of a working unit used in the figure 1 installation;
- figure 3 is a side view of the figure 2 working unit;
- figure 4 is a cross-section on a bigger scale of the top part of the figure 3 unit working station;
- figure 5 is a cross-section on a bigger scale of the bottom part of the figure 3 unit working station;
   figures 6 and 7 are respectively bigger scale cross-section and plan view of the bottom part of the working station;
- figure 8 is a block diagram of a hydraulic shock absorbing system in the bottom part of the working station; and
- figure 9 is a cross-sectional view of a specific punching tool and a specific die tool.
As illustrated in figures 1, 2 and 3, 1 indicates overall a sheet metal punching machine, featuring a central magazine 2 which stores a plurality of punch sets 3 and die sets 4. The magazine 2 is of a well-known type even though also used in installations other than the one which are going to describe and, consequently, we shall give only a brief description of it. Installation 1 comprises four working units 5, each of which includes a bench 6 fitted with a sheet clamping system 7, a first conveyer 8, extending along a first closed path 8a and designed to advance the punch sets 3, and a second conveyer 9, extending along a second closed path 9a and designed to advance the die sets 4. Installation 1 further comprises a device 11, on each line 8 and 9, serving to load tools from magazine 2 on to the respective conveyor lines 8 and 9 and reciprocally, and a working station 12, which is crossed by paths 8a and 9a.
Working station 12 comprises an upper part (figure 4) in which punch set 3 coupling devices 13 are fitted, along with devices 14 for the angular positioning of the said punch set 3, a drop hammer 15, mobile along a punching axis A, extending vertically through the working station 12 and intersecting paths 8a and 9a inside station 12 itself. The working station 12 further comprises a lower part in which are fitted die set 4 coupling devices 16, devices 17 for the angular positioning of the said die set 4, and devices 18 which act as hydraulic shock absorbers for die set 4 during the punching phase. Finally, installation 1 is equipped with an electronic control computer 21 (figure 3) which manages the functioning of magazine 2 and of each working unit 5.

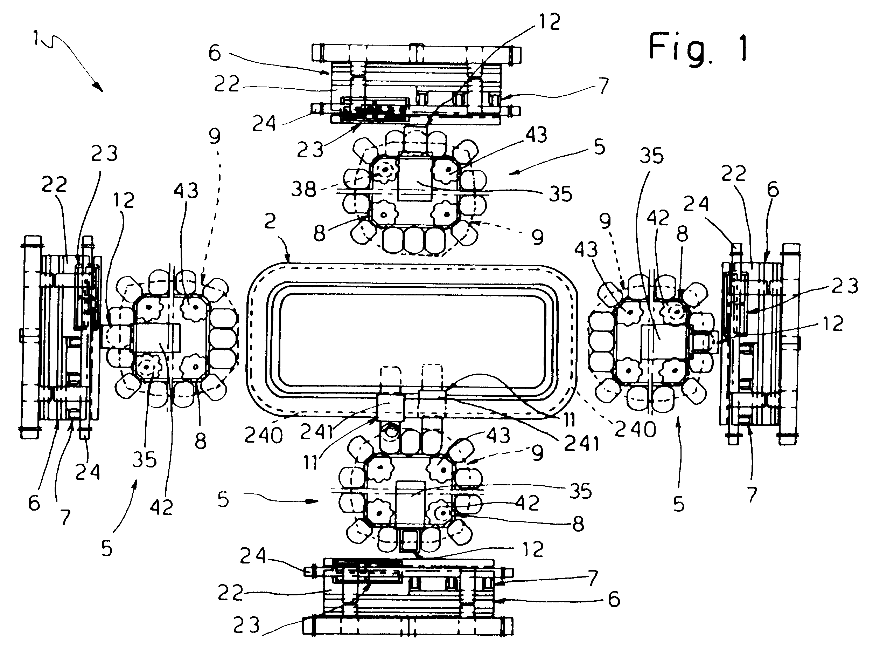

The magazine 2 may be of the type featuring internal shelves inside which cells are machined in order to house the tools, two internal conveyor lines, one for punch sets 3 and the other for die sets 4, plus devices serving to load the tools from the shelves on to the aforesaid internal conveyor lines. The devices 11 will thus load the tools between the internal lines and lines 8 and 9. In this connection, magazine 2 may include two devices 11 for each working unit 5 or, as illustrated in figure 1, two devices 11 used for all the working units 5. In the latter case, magazine 2 would feature a track enabling the devices 11 to shift from one working unit 5 to another. Computer 21 must have the capacity to memorize the position of the tools in magazine 2, the position of the tools along conveyor lines 8 and 9 and the position of the latter in reference to the corresponding working station 12. In view of the large amount of data to be momorized and in view of the fact that computer 21 has to enable the motorization of the magazine internal lines and also of lines 8 and 9, plus the functioning of devices 11 and the functioning of the equipment brought from benches 6, it would be feasible to equip installation 1 whith one computer 21 for each working group 5 and one computer 21 to manage magazine 2It would, naturally, be necessary in such a case, to provide an information exchange system between the various computers 21.

Bench 6 is of a known type and consequently only a brief description of it will be given. Bench 6 features a platform 22 on which to lay the metal sheets and on which clamping system 7 is installed. In addition, bench 6 is equipped with a device 23 which slides along a bridge 24 and includes a gripping device and devices enabling it to mob and rotate around its own axis (figures 1, 2 and 3).

As illustrated in figures 1 to 4, conveyor line 8 includes a chain 26 consisting of a series of links 27 hinged to each other. A yes link 27 and a no link 27 support a drawer 28 inside which a punch set 3 is housed.

Drawer 27, in particular, presents a cylindrical development externally and a truncated cone development internally, with the smaller diameter base of the latter defined at its bottom edge. Along the external face od drawer 28, two millings are machined in diametrically opposite positions and these are engaged by two small plates 29 and 30 with small plate 29 made solid with the corresponding link 27. From the top edge of drawer 28, there originates upwards an annular project 31, on the upper face of which two plates 32 are fixed on two diametrically opposite sides. The other two sides of projection 31 are faceted so as to prevent them from coming into contact with the projections 31 of the preceding and following drawers 28. At the bottom end of drawer 28, a notch is cut in which reference key 34 will be housed; the uses of this key are indicated below.

Each working unit 5 features a frame 35 from which originate two guides 36 and 37, inner and outer respectively. The links 27 run along inner guide 36 while small plates 30 run along outer guide 37.

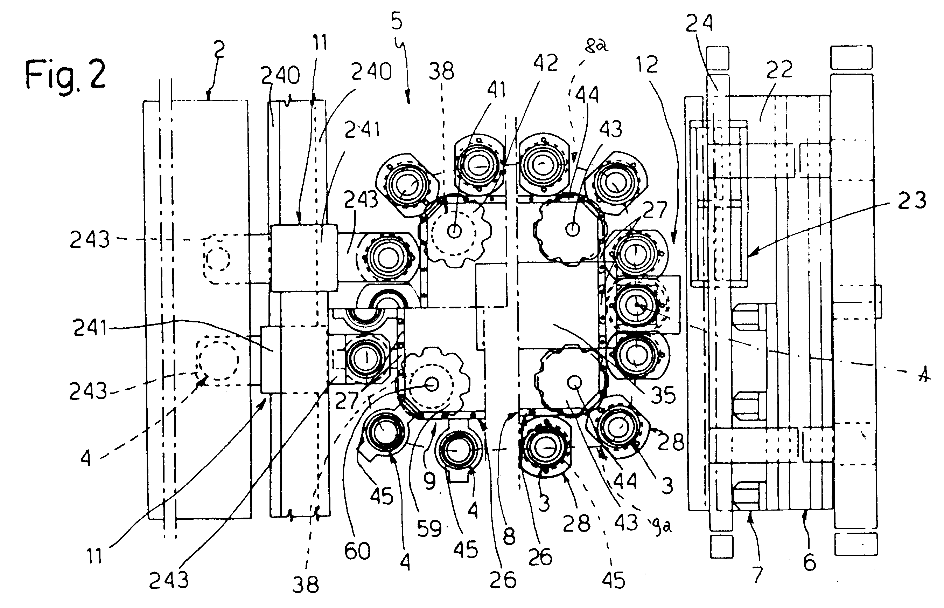

Frame 35 at bench 6 level supports working station 12. Conveyor line 8 is driven by an electric motor 38 illustrated in outline in figure 2 and featuring an output shaft 41 to which is keyed a gear wheel 42 meshing with the links from within the space enclosed by chain 26. In particular this space in plan forms substantially a quadrilateral at one of the apexes which gear wheel 42 is located while idler gear wheels 43 are mounted at the other three apexes on shafts 44.

As illustrated in figures 1, 2, 3 and 5, conveyor line 9 is similar to conveyor line 8 in that it, too, features a chain 26 consisting of links 27 . One yes link 27 and one no link 27 of chain 26 of line 9 support a tray 45 in which is drilled a through hole 46 which houses die set 4.

The top and bottom edges of hole 46 are bevelled for the purposes to be described below. The die set 4 comprises a cylindrical die-holder drawer 48 and a die 51. Drawer 48 comprises a central portion 52 on whose outer surface an annular groove is machined which is engaged by an O-ring 54 which tends to expand outside the said groove. Drawer 48 also features a bottom part 55 in which is cut a notch open underneath.

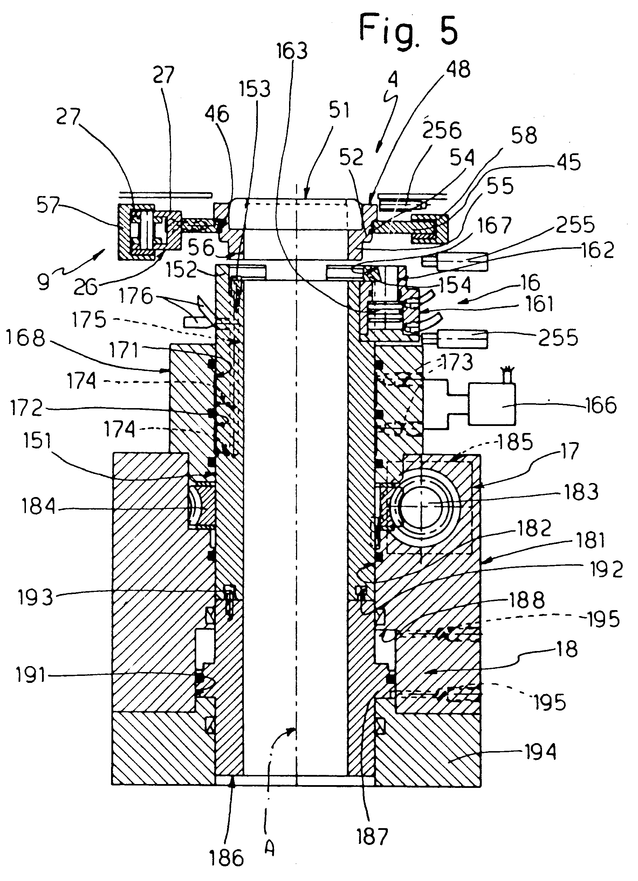

From frame 35, there originate two guides 57 and 58 similar to guides 36 and 37. The line 9 links 27 run along guide 57 while along guide 58 there will run the ends, opposite links 27, of trays 45 (figure 5). In figure 2 there is a partial illustration of line 9 which likewise defines a rectangular track on which, however, the side opposite that where working station 12 is defined is closer to magazine 2. Consequently, line 9 is longer than line 8 and can therefore carry a greater number of tools.

In this connection, it is possible to associate to each punch set 3 one or more die sets 4 depending on the thickness of the sheets to be punched. It is in fact known that the die set 4 will be selected for a given punch set 3 precisely in function of the thickness of the sheet. The movement of line 9 is similar to that of line 8, that is to say it involves the installation, at the apexes of the track followed by the line, of corresponding gear wheels 59, one of which is a driving wheel keyed to the output shaft 60 of an electric motor also numbered 38 because it is similar to the one which drives line 8. It must be pointed out that in figure 1, line 8 is illustrated schematically and for the sake of simplicity, line 9 is illustrated by a broken line.

In figure 4, punch set 3 is illustrated in cross-section; it is of a known type and we shall therefore now give a brief description of it. Punch set 3 consists of a tool 60 comprising an actual punch 61 and a column 62 solid with and coaxial to punch 61. The assembly is installed in one piece inside an axial hole drilled in a cylindrical body 63 which in its turn is installed inside a tubolar body 64, the upper end of which presents an annular projection 65 which extends inwards. Column 62 comprises a flanged base 66 caught between projection 65 and the upper face of body 63, and a wide head 67 in which a plurality of radial teeth 68 are machined. Between head 67 and projection 65, a helical spring 71 is fitted. Punch set 3 also includes a tubular bush 72 enabling it to be coupled with drawer 28. Bush 72 features an internal cylindrical development and an external truncated cone development. During punching operations, bush 72 remains fixed because secured to drawer 38 while the remainder of punch set 3 shifts downwards.

Referring to figure 4, the devices 13 serving to secure punch set 3 when it reaches the position of working station 12, comprise a fixed body 77 borne by frame 35 and shaped much like an upsidedown letter U. Body 77 thus features an upper side 78 and two lateral sides 81. In upper side 78, a through hole 82 is drilled axially in line with punch set 3. The space enclosed between the two lateral sides 81 comprises an upper section 83 into which emerges hole 82 and which holds column 62, and a lower section 84 which is wider than upper section 83 and thus defines a corresponding shoulder 85. The bottom ends of lateral sides 81 bear a respective plate 86 which extends inwards parallel to the corresponding shoulder 85. When line 8 is running, punch set 3 crosses the space enclosed between sides 81. In particular, the projection 31 of drawer 28 travels the space defined between plates 86 and the respective shoulders 85.

From two opposite sides, on the upper face of side 78, two breaks 88 are provided for purposes to be described later. In the innermost part of each break 88 and parallel to hole 82 in side 78, a respective hole 89 is provided; this also extends along the inner part of the corresponding side 81 until it debouches in shoulder 85.

In each hole 89, a pin 91 can slide axially in and out and when in position, it locks drawer 28 to body 77. Pin 91 features a point 95 which is shaped like a truncated cone, and a piston 96 wich delimits two annular chambers inside hole 89. Corresponding to these, in body 77, a duct 98 is provided which is connected in a fashion not illustrated with an oleopneumatic system which enables fluid to be admitted under pressure inside one of the two chambers thus causing pin 91 to shift either downwards or upwards. In the pin's downwards translation, the truncated cone point engages a truncated cone shaped hole drilled in plate 32.

A locking system using hydraulically operated pins is of a known type and, because of this, the entire oleodynamic system is illustrated schematically in unit 102. It must, nevertheless, be pointed out that unit 102 is controlled by computer 21.

Referring to figure 4, the devices 14 for the angular positioning of punch set 3, comprise a fixed body 103 resting on the top face of side 78 of body 77. In this body 103, a through hole is drilled coaxial with hole 82 and featuring a lower section 104 of the same diameter as hole 82, and an upper section 105 of larger diameter. The devices 14 also include a tubular sleeve 106 which can rotate around its own longitudinal axis and fitting inside hole 82 and the through hole of body 103. At the level of section 105, sleeve 106 features a top end of greater thickness on to which is keyed a gear wheel 107. Alongside section 105, in body 103, a cylindrical seat is provided with a horizontal longitudinal axis orthogonal to sleeve 106. This seat is open towards section 105 and it houses an endless screw 111 engaging whith gear wheel 107. Endless screw 111 is powered by an electric motor 112 illustrated in dotted line. Motor 112 is merely a servomotor, controlled by computer 21 and determining the clockwise or anticlockwise rotation of sleeve 106.

Naturally, motor 112 is provided with a device of the optic encoder type which records the angular position of its output shaft. Section 105 is closed by a plug 113 featuring a central through hole coaxial with the said section 105.

The devices 14 also include a cylindrical pin 115 which slides axially through the action of drop hammer 15. From the top downwards, pin 115 features a head 116 on which drop hammer 15 operates, a portion 117 around which between head 116 and plug 113, a spring 118 is fitted, a portion 119 which finds itself inside the upper part of sleeve 106, and a bottom portion 120, of smaller diameter than portion 119 and resulting in the central part of sleeve 106. At the bottom end of portion 120, a cylindrical body 121 is fixed coaxially and it fits into the bottom part of sleeve 106 and its diameter is between that of portion 119 and portion 120. Inside sleeve 106 and, in particular, along the aforesaid central and bottom parts, an annular body 123 is fitted which comprises a top portion 124 which houses within it portion 120 of pin 115, and a bottom portion 125 which houses within it part of portion 120 and body 121.

The internal diameter of portion 124 is substantially the same as that of portion 120, while its external diameter is less than the internal diameter of sleeve 106. The internal diameter of portion 125 is substantially the same as the internal diameter of sleeve 106. The form thus described of body 123 defines within its two portions 124 and 125 an inner shoulder and and outer shoulder around which two annular chambers 128 and 131 are created.

Chamber 128 is defined between sleeve 106 and the external face of portion 124, while chamber 131 is defined between the inner face of portion 125 and portion 120. Body 123 can shift axially under hydraulic control and it is angularly solid with sleeve 106. In point of fact, on the outer face of portion, a re-entrant is machined axially which is engaged by a key carried by sleeve 106. The re-entrant and the key are illutrated by dotted lines in figure 4. Along pin 115, two axial holes 134 are drilled comprising a respective entry aperture 135 in head 116 and respective exit apertures 136 and 137, the first located at the top end of portion 120 and the second at the bottom end of portion 120 itself. Exit aperture 136, throug notches 138 machined at the top end of portion 124, communicates with chamber 128, while exit aperture 137 communicates with chamber 131.

It is also planned to install an oleodynamic system described schematically in this case too as a unit 141 controlled by computer 21 in order to send fluid under pressure to chambers 128 and 131 in alternational in order to actuate the translation of body 123. At its bottom end, this body features a number of teeth 142 which, when body 123 translates downwards, nesh with the radial teeth 68 of column 62.

In use under hydraulic control, body 123 translates downwards and engages with column 62. By next operating motor 112, sleeve 106 is rotated and so is tool 60 via body 123 and column 62. In order to effect a punching operation, the procedure to be followed is substantially the known one, that is to say, under hydraulic control, as described below, drop hammer 15 is thrust downwards and, via pin 115, it drives tool 60 downwards.

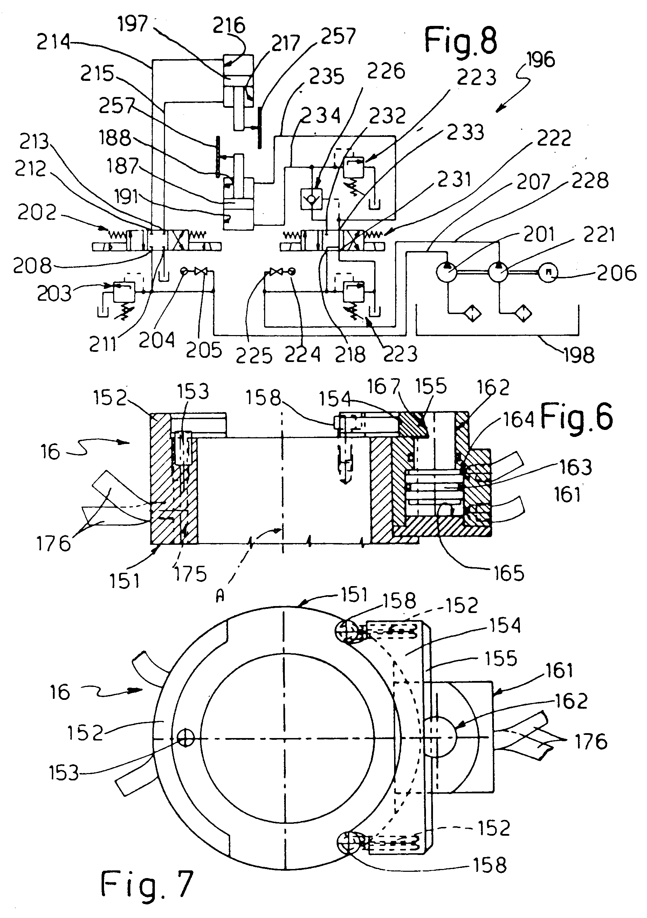

Referring to figures 5, 6 and 7, the aforesaid devices 16 coupling die set 4 at working station 12 comprise an internally hollow cylindrical body 151 positioned axially to die set 4 and capable of moving axially between one release position and one locking position into which engages portion 55 od drawer 48. From the top edge of body 151 there extends upwards on one side a projection 152 of reduced thickness compared to that of body 151. This projection 152 develops in plan in the form of the arc of a circle (figure 7). On the centre line of projection 152 on the edge of body 151, a screw 153 is screwed in the axis of which is parallel to that of body 151. The head of screw 153 in the aforesaid locking position engages with notch 56 of drawer 48 constituting a point of reference between this and body 151.

On the side opposite to the one where projection 152 is located, the top edge of body 151 bears a plate 154 presenting an inner edge directed towards projection 152 which develops in accordance with the arc of a circle, the diameter of which is substantially that of the circumference of the inner edge of projection 152. The external edge opposite the inner edge of plate 154 is rectilinear and presents a bevel 155. Matching the other two opposite edges of plate 154, a respective seat is machined open towards projection 152 and housing a respective spring 157. This, outside the seat, strikes the head of a corresponding screw 158 screwed in the top edge of body 151 with the same procedures as screw 153 (figures 6 and 7). In correspondence with plate 154, part of the outer face of body 151 is levelled and to it is fixed a bell-shaped body 161 in which is housed a pin 162 the axis of which is parallel to that of body 151. Pin 162 features a piston 163 which, within body 161 delimits and seals two chambers 164 and 165 connected to an oleodynamic system of a known type illustrated schematically in figure 5 as unit 166, cleared for operation by computer 21. At the top end of pin 162, there is a break 167 engaged by bevel 155 of plate 154 by the action of spring 157.

In use when body 151 translates upwards, portion 55 of drawer 48 is imprisoned between projection 152 and the inner edge of plate 154. Imposing a downwards translation on pin 162, this sets in motion, against the action of spring 157, a translation of plate 154 towards projection 152. This tightens up portion 55 of drawer 48. This is allowed by the conformation of bevel 155 and break 167 which complement each other. More precisely, bevel 155 is defined along an oblique plane which converges inwards with the axis of pin 162. Likewise, break 167 is fashioned in such a way as to define a side which lies on the same plane as bevel 155.

Referring to figure 5, just below body 161, part of body 151 is housed in a fixed tubulr sleeve 168. Between the inner face of sleeve 168 and the outer face of body 151, two annular chambers 171 and 172 are defined, one on top of the other, obtained by means of annular re-entrants machined into the inner face of sleeve 168. The chambers 171 and 172 present a respective entry mouth 173 fashioned in sleeve 168 and connected to unit 166 and a respective exit mouth 174 fashioned in body 151 and connected with a respective channel 175 fashioned axially along the said body 151. Chambers 164 and 165 are in hydraulic communication with a respective channel 175 via a duct 176. It must be pointed out that entry mouths 173 are fashioned in correspondence with the upper part of chambers 171 and 172 while exit mouths 174, when body 151 is in released condition, turn out to be in communication with the lower part of chambers 171 and 172. The lay-out, described above, of the hydraulic supply system of chambers 171 and 172 enables body 151 to be translated axially and rotate around its own axis without interfering with this supply.

Referring to figure 5, the aforesaid devices 17 comprise a body 181 fixed to frame 35 and in which a hole 182 is drilled which houses the lower part of body 151. In body 181 there is fashioned a seat the longitudinal axis of which is orthogonal to that of body 151 which houses an endless screw 183 mesingh with a gear wheel 184 made angularly solid, by means of a key, with body 151. Endless screw 183 is connected, in a way which is not illustrated, with the output shaft of an electric motor 185 illustrated in outline and actuated by computer 21.

The devices 18 include a tubular sleeve which centrally presents an external annular projection which defines a piston 187. Sleeve 186 is fitted at the bottom of body 151 and coaxially with it. Piston 187 turns out to be in correspondence with a lower section of greater diameter than hole 182 in such a way as to define two annular chambers 188 and 191, respectively above and below, and water-tight between them. Sleeve 186 is made axially solid with body 151 but angularly unconnected. This is made possible by the machining, along the bottom end of body 151, of an annular track 192 which, in cross-section, prsents the conformation of a screw and, more precisely, of a large head and part of the shank of the screw. Inside this track 192, there runs the head of a screw 193 fixed to the top edge of sleeve 186. Naturally, within track 192, a break (not illustrated) is provided to allow the head of screw 193 to be fitted inside it. Below body 181 and coaxially with it, there is installed an annular tray 194 fixed to body 181. This tray 194 receives internally the lower part of sleeve 186 and delimitates the bottom of lower chamber 191. Within body 181, two ducts 195 are provided, one for each chamber 188 and 191, and connecting the latter with an oleodynamic unit 196 illustrated in figure 8. Unit 196 enables sleeve 186 to be translated upwards by inserting fluid under pressure into chamber 191. Sleeve 186 also causes the upwards translation of body 151 wich goes on to lodge its upper part in portion 55 of drawer 48. Body 151 draws the entire die set 5 upwards until ring 54 aligns with the upper bevel machined in hole 46. The fitting of ring 54 determines a resistance to the upwards translation of die set 4 thus facilitating the coupling of body 151 with drawer 48. Ring 54 engages with the upper bevel of hole 46 when sleeve 186 reaches its upper stop. Subsequently, by means of pin 162, portion 55 of drawer 48 is lodged tithtly between projection 152 and plate 154.

In figure 8, there is a schematic illustration of oleodynamic unit 196 whiwh is naturally operated by computer 21 and used for the translation of body 151, the actuating of drop hammer 15, and acts as a sock absorber for die set 4 during the punching phase. In unit 196, 197 indicates a hydraulic piston which actuates the translation of drop hammer 15, and with 187, the piston fasioned in sleeve 186. Unit 196 includes a fluid supply circuit fed from a tank 198 for each piston 197 and 187.

The fluid supply circuit feeding piston 197 comprises a pump 201, an electrohydropiloted valve 202 of the three-position type, a pressure regulating valve 203, and a pressure gauge 204 fitted with a tap 205. Pump 201 is operated by a motor 206, draws fluid from pump 198 and introduces the fluid, via a duct 207, into the inlet 208 of valve 202. Valve 203 and pressure gauge 204 are branch fitted to duct 207. Valve 202 features three outlets 211, 212, 213; of these 211 acts as a drain while outlets 212 and 213 are connected, via a respective duct 214 and 215, to a corresponding chamber 216 and 217 delimitated by piston 197. As stated, valve 202 can assume three positions, one neutral and the other two piloting piston 197. In neutral position, there is no communication between inlet 208 and outlets 211, 212 and 213. In a first piloting position, inlet 208 is connected to outlet 212, while outlet 213 is connected to outlet 211. In this position, fluid is inserted in chamber 216 while chamber 217 drains out, thus enabling piston 197 to shift downwards and actuating drop hammer 15 into carrying out a sheet metal punching operation.

In the second piloting position, inlet 208 is connected with outlet 213, while outlet 212 is connected with outlet 211. In this position, chamber 216 drains out, while fluid is inserted into chamber 217, thus enabling piston 197 to rise upwards and no longer exert any pressure on drop hammer 15.

The piston 187 supply circuit comprises a pump 221, an electrohydropiloted valve 222 of the three-position type, due pressure regulating valves 223, a pressure gauge 224 fitted with a tap 225 and a hydropiloted return valve 226. Pump 221 is actuated by motor 206, draws fluid from tank 198 and inserts it, via a duct 227, into inlet 228 of valve 222. This valve features three outlets 231, 232 and 233; outlet 231 acts as a drain, outlet 232 communicates, via a duct 234, with chamber 191, and outlet 233 communicates, via a duct 235, with chamber 188. Along duct 227, pressure gauge 224 and one of the 223 valve are branch-connected. As stated, valve 222 can assume three positions, one neutral and two piston 187 piloting positions. In neutral position inlet 228 and outlet 233 are in communication with outlet 231 and consequently drain out. In a first piloting position, inlet 228 is connected with outlet 232, while outlet 233 is connected with outlet 231. In this position piston 187 is translated upwards. In second piloting position, inlet 228 is connected with outlet 233, while outlet 232 is connected with outlet 231, thus shifting piston 187 downwards.

As already described, piston 197 is made to drop down and rise upwards in order to execute the punching cycle. Piston 187, instead, may be used in various other ways, apart from its primary function of translating body 151 upwards and then make it solid with die set 4. A first use consists of sending piston 187 to its top travel stop and keeping it there with such a pressure as to centainly counteract the thrust exerted by piston 197 and consequently by punch set 3 during the punching phase. A second use consists of making piston 187 rise up to a centreline position. In this case, too, the fluid present in chamber 191 will react against the thrust exerted by punch set 3 during the punching phase. Moreover, given the distance between piston 187 and its top travel stop, the recoil which normally occurs in piston 187, on completion of the punching operation, will be absorbed by the fluid present in chamber, thus preserving the top travel stop defined in hole 182 from knocks. Valve 226 is calibrated for a preset pressure value, so as to allow fluid to drain out from chamber 191 when the corresponding valve 222 is in the aforesaid second piloting position.

A third use for unit 196 involves a metal sheet deep drawing operation which require the installation of a die set in line 8 and of a suitable punch set in line 9. In this late case, it is sufficient to reverse the functions between pistons 197 and 187, by reversing their respective supply circuits.

Referring to figure 3, the devices 11 comprise a respective support group 241 designed to translate along a corresponding track 240 in order to carry out its function in the various working units 5.

Support body 241 is fitted with a vertical rod 242 which translates axially and can rotates on its own axis. Rod 242, at one end, supports two radial arms extending in opposite directions and fitted with clamping devices which are not illustrated because they are of a well-known type. As illustrated in figures 2 and 3, the two devices 11 are fitted in staggered fasion, both in reference to their own longitudinal axis, since, as indicated previously, line 9 follows a longer track, and also in reference to the plane along which lie the longitudinal axes of the arms 243. This in order not to foul one another during their respective loading operations.

As indicated before, computer 21 controls and operates the entire installation 1 in its various operating phases. In particular, computer 21 manages magazine 2, memorizing the position of all the tools in magazine 2 and along lines 8 and 9 of the various working units 5. It is thus possible to programme, for each working unit 5, a work cycle which will automatically managed by computer 21. Computer 21 also handles the movements of the devices 11 along the tracks 240 as well as all tool-loading operations. As described eralier, computer 21 manages the movements along lines 8 and 9 in all the operations executed along them, including tools loading, the locking of tools in working station 12, and the selection of die set 4 for a punch set 3 depending on the thickness of the metal sheet.

This information can be supplied to computer 21 when the working cycle is entered in it, or installation 1 may be equipped with a device able to determine this thickness and send this information to computer 21. The latter manages working benches 6 with all the equipment fitted on them.

Referring to figure 4, six sensors fitted at the top of working station 12 are connected to computer 21. A first sensor 251 is designed to monitor presences and their distance from reference key 34. The presence of key 34 signals the presence of a punch set 3 at working station 12, while the recording of the distance between sensor 251 and key 34 signals the length of this key 34. Indeed,in installation 1, there are some punch sets 3 fitted with a key 34 of reduced length which does not interfere with their axial rotation despite variations in their angular positions, as well as some punch sets 3 fitted with a key 34 of greater length which engages a seat machined in body 34. This key 34 prevents the rotation of punch set 3 and consequently computer 21 receives the information that the punch set 3 concerned cannot be rotated. This last punch set 3 is used when the job to be executed is a difficult one involving heavy stresses which must not be transmitted to the system governing the rotation of punch set 3.

Facing each break 88, a respective pair of sensor 252 are fitted which connected to computer 21 and designed to detect the position of an arm 253 which extends to the corresponding pin 91. The sensors 252 are therefore designed to monitor the centering or not of pins 91 operated hydraulically via unit 102. Inside body 77, a sixth sensor 254 is fitted designed to monitor the meshing of gear teeth 142 and 68 and hence the possibility of operating the rotation of punch set 3 and clearing drop hammer 15 for translation. Indeed, were the aforesaid meshing not to take place, body 64 would translate downwards and consequently sensor 254 would record this translation, because it would increase the distance between it and a reference point fashioned in body 64, and block the functioning of the working cycle. Naturally, once meshing has occured, this sensor 254 would be deactivated.

Referring to figure 5, three sensors are connected to computer 21; these are mounted at the bottom of working station 12. A pair of sensors 255 is designed to monitor the axial translation of body 151 between the two travel stops, while a third sensor 256 is designed to monitor the upwards translation of die set 4. Sensors 255 and 256 are therefore designed to monitor the realization of the coupling between body 151 and die set 4.

Computer 21 also manages, using the procedures already described, the oleodynamic units numbered 102 and 141 (figure 4), 166 (figure 5), and 196 (figure 8). Finally, computer 21 manages the rotation of the tools by means of motors 112 and 185. Naturally, these motors are fitted with devices of the optic encoder type which monitor the angular position of their respective output shafts and hence the angular position imposed on the tools. In use, on completion of punching operations, the tools are returned to their original positions which will thus be taken as reference positions. Also connected to computer 21 are two further sensor 257, illustrated schematically in figure 8 and designed to monitor the linear translation of pistons 197 and 187. By means of these sensors, it is possible to programme the axial position of the two pistons 197 and 187 so as to be able to play on the stroke of pistons 197 and 187 as well as on the final position of these, in relation to the punching phase.

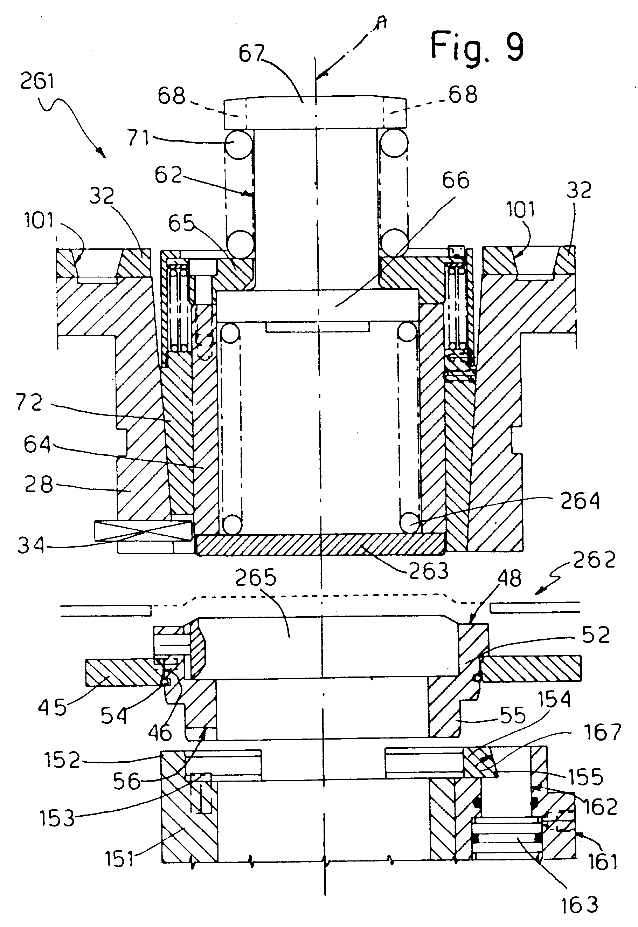

In figure 9, there is an illustration of a member 261, wrongly called punch set because similar to it and a member 262 wrongly called die set because similar to it. PUnch set 261 differs from the one indicated as 3 because it does not contain punch 61 and body 63. Punch set 261 features, instead, in addition to punch set 3, a circular plate 263 fixed coaxially to the bottom end of body 64, and a spring 264 fitted between the base 66 of column 62 and plate 263. All the other component parts of punch set 261 are similar to those of set 3 and are therefore given the same numbers. Die set 262 differs from the one indicated as 4 because of the fact that, in this case, drawer 48 does not house a die 51 but a solid body 265. All the other component parts of die set 262 are similar to those of set 4 and are therefore given the same numbers.

In operation, sets 261 and 262 are used to rotate metal sheets around their own lingitudinal axes. In order to do this, all that is required is to operate hydraulic unit 196 so as to translate pistons 197 and 187 one against the other, thus trapping the metal sheet between plate 263 and solid body 265. Now, by actuating in synchrony the rotation of punch set 261 and die set 262, we determine the rotation of the metal sheet until it reaches an angular position programmed in computer 21 and monitored by the optic encoders of motors 112 and 185.

The functioning of installation 1 has already been described, to a great extent, and, consequently, we shall indicate the principal phases only. In particular, data will be entered in computer 21 for the execution of a punching cycle for each working unit 5. This data will consist of the positions in relation to two reference axes x and y, orthogonal each other in which punching is to be effected, in the type of conformation of the cuts to be made and in the thickness of the metal sheet. For each working unit 5, computer 21 will control the loading, along lines 8 and 9, of the tools required for the punching cycle. Loading may be carried out before or even during the cycle. This choice depends on the number of tools which must be used and which may also exceed the number of tools which lines 8 and 9 can convey. It must be considered, moreover, that since there are several working groups 5, the case may arise in which a specific tool in programmed for the cycle of another working unit 5. Computer 21, on the basis of the cycles of all the working units and the number of tools at its disposal in magazine, will select the best disposition of the tools in order to execute all the cycles in the shortest possible time.

Once the order of the cycles of the various working units 5 has been set, computer 21 will order the loading of the tools and the movement of conveyor lines 8 and 9, and the execution of the punching operations. As previously indicated, all the installation's operating phases are controlled by sensors wich monitor the correctness of the phases. Should installation 1 be equipped with a device which automatically ensures the loading of the sheets and which furnishes computer 21 with the punching cycle applicable to every sheet loaded, this would make the running of installation 1 fully automatic with all the advantages deriving in the production costs field.

The foregoing description highlights the many and obvious advantages resulting from the implementation of the present invention.

In particular, an extremely high number of tools will be used in installation 1, practically whithout any limitation. Moreover, the tools may be used in more than one working units 5 and, consequently, installation 1 fosters the maximum use of the tools, bearing in mind the punching cycles of each working unit. It appears obvious that these advantages ensure a reduction in working times and maching costs. Moreover, installation 1 presents a numerous series of technical advantages such as the provision of a shock absorbing system for die set 4 during the punching phase and the installation of tools rotation devices, the latter also usable for rotating the metal sheets. In addition, installation 1 features simple and rapid tools locking systems at working station 12 level.

In particular, in each working unit 5, it is possible to install more than one working station 12. Furhermore, the track followed by lines 8 and 9 can be different from the one described.

## Claims

1. A sheet metal punching machine comprising:
a plurality of punch sets (3);
a plurality of die sets (4);
a first line (8) of the type comprising a plurality of first seat means (28) for said punch sets (3);
a second line (9) of the type comprising a plurality of second seat means (45) for said die sets (4);
at least a working station (12) comprising a drop hammer (15) mobile along a vertical punching axis (A), first centering means (13) for one of said first seat means (28), said one first seat means (28) constantly supporting, in use, a respective punch set (3) during advancement and punching, and second centering means (16) for one of said die set (4), said one die set (4) being constantly accommodated, in use, within a respective said second seat means (45) during advancement and punching;
an electrical control computer (21) designed to manage the functioning of the entire installation; wherein
said first (8) and second (9) line comprises, each, a powered conveyer chain (26), said first conveyer chain (26) carrying said first seat means (28), lodging, each, a said punch set (3), and said second conveyer chain (26) carrying said second seat means (45), lodging, each, a said die set (4).

2. Machine according claim 1, characterised by the fact that said first centering means (13) comprises a upside-down U shaped fixed body (77), comprising two lateral sides (78) connected by a top side (81); each lateral side (78) having a drive designed to be engaged by each first seat means (28) crossing said working station (12) when said first line (8) is operated, each drive being formed by an inner shoulder (85) and a strip (86), mounted at the bottom end of said lateral side (78) and extending parallel to said shoulder (85); each first seat means (28) having two opposing projections (31) designed, each, to engage a respective said drive.

3. Machine according claim 2, characterised by the fact that said first centering means (13) further comprise at least a first pin (91) fitted through a said shoulder (85) and mobile between an upper position, in which said first line (8) is free to cross said working station (12), and a bottom position, in which an end portion (95) of said pin (91) engages a hole (101) fashioned in the said first seat means (28) for pressing said first seat means (28) themselves against said strips (86).

4. Machine according claim 3, characterised by the fact that said end portion (95) and said hole (101) are cone shaped.

5. Machine according claims 2 to 4, characterised by the fact that said working station (12) has a first positioning device (14) for angularly positioning said punch sets (3) when blocked inside said working station (12); said first positioning device (14) comprising a tubular sleeve (106), extending axially through said top side (81) of said fixed body (77) and ratable about said axis (a)) under the action of a first power device (112), and first pick up means (123), designed to axially connect said tubular sleeve (106) with a blocked punch set (3).

6. Machine according claims 1 to 5, characterised by the fact that said second centering means (16) comprise second pick up means, defined by a couple of jaws (152,154) mounted at a top end of an axial tubular body (151)) mounted ratable about said axis (A); said tubular body (151) being further designed to move axially between a rest and an operative position, wherein said jaws (152,154) are operated for axially connecting said tubular body (151) itself with a respective said die set (4).

7. Machine according claim 6, characterised by the fact that said working station (12) has a second positioning device (17) for angularly positioning said die sets (4) when blocked inside said working station (12); said second positioning device (17) comprising a second power device (183,184,185) designed to rotate said tubular body (151).

8. Machine according claims 6 or 7, characterised by the fact that said working station (12) comprises a shock absorber device (18), in turn comprising a hydraulically powered piston (187), designed to move axially said tubular body (151); said piston (187) defining two seal annular chamber (188,191), connected to a hydraulic power unit (196), designed, in use, to absorb stresses generated by punching.

9. Machine according claims 1 to 8, characterised by the fact that it further includes a magazine (2), storing said punch set (3) and said die set (4), and a first and a second device (11,12) for loading respectively, said first (8) and second (9) line with said punch sets (3) and said die sets (4).

## Patentansprüche

1. Blechstanzmaschine, mit
- mehreren Prägestempelanordnungen (3),
- mehreren Stanzstempelanordnungen (4),
- einer ersten Strecke (8), die mehrere erste Sitzmittel (28) für die Prägestempelanordnungen (3) enthält,
- einer zweiten Strecke (9), die mehrere zweite Sitzmittel (45) für die Stanzstempelanordnungen (4) enthält,
- zumindest einer Arbeitsstation (12) mit einem Fallhammer (15), der sich entlang einer vertikalen Stanzachse (A) bewegen kann, ersten Zentriermitteln (13) für eine der ersten Sitzmittel (28), wobei die ersten Sitzmittel (28) im Betrieb dauernd eine entsprechende Prägestempelanordnung (3) während der Vorwärtsbewegung und dem Stanzen halten und zweiten Zentriermitteln (16) für eine der Stanzstempelanordnungen (4), wobei die eine Stanzstempelanordnung (4) im Betrieb andauernd in einem entsprechenden zweiten Sitzmittel (45) während der Vorwärtsbewegung und dem Stanzen aufgenommen wird,
- einem elektrischen Steuercomputer (21), der dafür ausgelegt ist, das Funktionieren der gesamten Installation zu überwachen, wobei
- jede der ersten Strecke (8) und der zweiten Strecke (9) eine angetriebene Förderkette (26) enthält, wobei die erste Förderkette (26) die ersten Sitzmittel (28) trägt, die jeweils eine Prägestempelanordnung (3) aufnehmen, und wobei die zweite Förderkette (26) die zweiten Sitzmittel (45) trägt, die jeweils eine Stanzstempelanordnung (4) aufnehmen.

2. Maschine nach Anspruch 1,
gekennzeichnet durch
die Tatsache, daß die ersten Zentriermittel (13) einen festgelegten Körper (77) enthalten, der eine umgekehrte U-Form aufweist, mit zwei lateralen Seiten (78), die durch eine Oberseite (81) verbunden sind, wobei jede laterale Seite (78) einen Antrieb aufweist, der so ausgelegt ist, daß er durch jedes der ersten Sitzmittel (28) in Eingriff gebracht werden kann, die die Arbeitsstation (12) kreuzen, wenn die erste Strecke (8) betätigt wird, wobei jeder Antrieb durch eine innere Schulter (85) und einen Streifen (86) gebildet ist, montiert am Bodenende der lateralen Seite (78) und sich erstreckend parallel zu der Schulter (85), wobei jede der ersten Sitzmittel (28) zwei gegenüberliegende Vorstehungen (31) aufweisen, die jeweils dafür ausgelegt sind, mit einem entsprechenden Antrieb in Eingriff zu kommen.

3. Maschine nach Anspruch 2,
gekennzeichnet durch
die Tatsache, daß die ersten Zentriermittel (13) zumindest einen ersten Stift (91) aufweisen, der durch die Schulter (85) gepaßt ist und beweglich zwischen einer oberen Position ist, in der die erste Strecke (8) die Arbeitsstation (12) frei kreuzen kann, und einer Bodenposition ist, in der ein Endabschnitt (95) des Stifts (91) mit einem Loch (101) in Eingriff kommt, das in dem ersten Sitzmittel (28) angeordnet ist, zum Drücken der ersten Sitzmittel (28) selbst gegen die Streifen (86).

4. Maschine nach Anspruch 3,
gekennzeichnet durch
die Tatsache, daß der Endabschnitt (95) und das Loch (101) eine Kegelform aufweisen.

5. Maschine nach Ansprüchen 2 bis 4,
gekennzeichnet durch
die Tatsache, daß die Arbeitsstation (12) ein erstes Positionierungsgerät (14) zur Winkelpositionierung der Prägestempelanordnungen (3) aufweist, wenn diese innerhalb der Arbeitsstation (12) festgelegt sind, wobei das erste Positionierungsgerat (14) eine röhrenförmige Buchse (106) enthält, die sich axial durch die Oberseite (81) des festgelegten Körpers (77) erstreckt und um die Achse (a) unter der Wirkung eines ersten Antriebsgeräts (112) drehbar ist und wobei erste Greifer (123) vorgesehen sind, die dafür ausgelegt sind, die röhrenförmige Buchse (106) mit einer festgelegten Prägestempelanordnung (3) axial zu verbinden.

6. Maschine nach Ansprüchen 1 bis 5,
gekennzeichnet durch
die Tatsache, daß die zweiten Zentriermittel (16) zweite Greifer enthalten, die durch mehrere Einspannklemmen (152, 154) gebildet werden, die am oberen Ende eines axialen röhrenförmigen Körpers (151) montiert sind, der rotierbar um die Achse (A) montiert ist, wobei der röhrenförmige Körper (151) dazu ausgelegt ist, sich axial zwischen einer Ruhestellung und einer Betriebsstellung zu bewegen, in der die Einspannklemmen (152, 154) für ein axiales Verbinden des röhrenförmigen Körpers (151) selbst mit einer entsprechenden Stanzstempelanordnung (4) betätigt werden.

7. Maschine nach Anspruch 6,
gekennzeichnet durch
die Tatsache, daß die Arbeitsstation (12) ein zweites Positionierungsgerät (17) zur Winkelpositionierung der Stanzstempelanordnungen (4) aufweist, wenn diese innerhalb der Arbeitsstation (12) festgelegt sind, wobei das zweite Positionierungsgerät (17) ein zweites Antriebsgerät (183, 184, 185) enthält, das dazu ausgelegt ist, den röhrenförmigen Körper (151) zu drehen.

8. Maschine nach Anspruch 6 oder 7,
gekennzeichnet durch
die Tatsache, daß die Arbeitsstation (12) ein Schockabsorbiergerät (18) enthält, das wiederum einen hydraulisch angetriebenen Kolben (187) enthält, der dazu ausgelegt ist, den röhrenförmigen Körper (151) axial zu bewegen, wobei der Kolben (187) zwei ringförmige Dichtkammern (188, 191) bildet, der mit einer hydraulischen Antriebseinheit (196) verbunden ist, die dafür ausgelegt ist, im Betrieb die durch das Stanzen erzeugten Belastungen zu absorbieren.

9. Maschine nach Ansprüchen 1 bis 8,
gekennzeichnet durch
die Tatsache, daß ein Magazin (2) vorgesehen ist, welches die Prägestempelanordnung (3) und die Stanzstempelanordnung (4) aufnimmt und weiterhin ein erstes und ein zweites Gerät (11, 12) vorgesehen sind, zum Aufnehmen der ersten Strecke (8) und der zweiten Strecke (9) mit den Prägestempelanordnungen (3) und den Stanzstempelanordnungen (4).

## Revendications

1. Machine à poinçonner la tôle comprenant :
une pluralité de jeux de poinçons (3);
une pluralité de jeux de matrices (4);
une première ligne (8) du type comprenant une pluralité de premiers dispositifs de sièges (28) pour lesdits jeux de poinçons (3);
une seconde ligne (9) du type comprenant une pluralité de seconds dispositifs de sièges (45) pour lesdits jeux de matrices (4);
au moins un poste de travail (12) comprenant un pilon (15) mobile le long d'un axe de poinçonnage vertical (A), un premier dispositif de centrage (13) pour un desdits premiers dispositifs de sièges (28), ledit premier dispositif de sièges (28) supportant en permanence, lors de l'utilisation, un jeu de poinçons respectif (3) pendant l'avancement et le poinçonnage, et un second dispositif de centrage (16) pour un desdits jeux de matrices (4), ledit jeu de matrices (4) étant logé en permanence, lors de l'utilisation, dans ledit second dispositif de sièges respectif (45) pendant l'avancement et le poinçonnage;
un ordinateur de commande électrique (21) conçu pour gérer le fonctionnement de l'installation complète; dans lequel ladite première (8) et seconde (9) ligne comprennent, chacune, une chaîne de convoyeur actionné par moteur (26), ladite première chaîne de convoyeur (26) comportant ledit premier dispositif de sièges (28), logeant chacune, un jeu de poinçons (3), et ladite seconde chaîne de convoyeur (26) comportant ledit second dispositif de sièges (45), logeant, chacune, un jeu de matrices (4).

2. Machine selon la revendication 1, caractérisée par le fait que ledit premier dispositif de centrage (13) comprend un corps fixe, la tête en bas en forme de U (77), comprenant deux faces latérales (78) reliées par une face du dessus (81); chaque face latérale (78) ayant un mécanisme conçu pour être en prise avec chaque premier dispositif de sièges (28) traversant ledit poste de travail (12) lorsque ladite première ligne (8) fonctionne, chaque mécanisme étant formé par un épaulement interne (85) et une bande (86), montée sur l'extrémité du fond de ladite face latérale (78) et s'étendant parallèlement audit épaulement (85); chaque premier dispositif de sièges (28) ayant deux saillies opposées (31) conçues, chacune pour être en prise avec un desdits mécanismes respectifs.

3. Machine selon la revendication 2, caractérisée par le fait que ledit premier dispositif de centrage (13) comprend en outre au moins une première broche (91) ajustée via ledit épaulement (85) et mobile entre une position supérieure, dans laquelle ladite première ligne (8) est libre de traverser ledit poste de travail (12), et une position inférieure, dans laquelle une partie d'extrémité (95) de ladite broche (91) est en prise dans un trou (101) usiné dans lesdits premiers dispositifs de sièges (28) pour presser lesdits premiers dispositifs de sièges (28) eux-mêmes contre lesdites bandes (86).

4. Machine selon la revendication 3, caractérisée par le fait que ladite partie d'extrémité (95) et ledit trou (101) sont formés en cône.

5. Machine selon les revendications 2 à 4, caractérisée par le fait que ledit poste de travail (12) a un premier dispositif de positionnement (14) pour positionner angulairement lesdits jeux de poinçons (3) lorsqu'ils sont bloqués à l'intérieur dudit poste de travail (12); ledit premier dispositif de positionnement (14) comprenant un manchon tubulaire (106), s'étendant axialement à travers ladite face du dessus (81) dudit corps fixe (77) et pouvant tourner autour dudit axe (a) sous l'action d'un premier dispositif d'actionnement (112), et un premier dispositif de saisie (123), conçu pour raccorder axialement ledit manchon tubulaire (106) avec un jeu de poinçons bloqué (3).

6. Machine selon les revendications 1 à 5, caractérisée par le fait que ledit second dispositif de centrage (16), comprend un second dispositif de saisie, défini par un couple de mâchoires (152, 154) monté sur une extrémité du dessus du corps tubulaire axial (151) monté de façon tournante autour dudit axe (A); ledit corps tubulaire (151) étant en outre conçu pour se déplacer axialement entre une position de repos et une position de travail, dans laquelle lesdites mâchoires (152, 154) sont actionnées pour relier axialement ledit corps tubulaire (151) lui-même audit jeu respectif de matrices (4).

7. Machine selon la revendication 6, caractérisée par le fait que ledit poste de travail (12) a un second dispositif de positionnement (17) pour positionner angulairement lesdits jeux de matrices (4) lorsqu'ils sont bloqués à l'intérieur dudit poste de travail (12); ledit second dispositif de positionnement (17) comprenant un second dispositif d'actionnement (183, 184, 185) conçu pour faire tourner ledit corps tubulaire (151).

8. Machine selon les revendications 6 ou 7, caractérisée par le fait que ledit poste de travail (12) comprend un dispositif absorbeur de chocs (18), comprenant à son tour, un piston actionné hydrauliquement (187), conçu pour déplacer axialement ledit corps tubulaire (151); ledit piston (187) définissant deux chambres annulaires étanches (188, 191), reliées à une unité d'actionnement hydraulique (196), conçu pour absorber, lors de l'utilisation, des contraintes générées par le poinçonnage.

9. Machine selon les revendications 1 à 8, caractérisée par le fait qu'elle comprend en outre un magasin (2), pour stocker ledit jeu de poinçons (3) et ledit jeu de matrices (4), et un premier et un second dispositif (11, 12) pour charger respectivement, ladite première (8) et ladite seconde (9) ligne avec lesdits jeux de poinçons (3) et lesdits jeux de matrices (4).
